# EUROPÄISCHE PATENTANMELDUNG

(11) **EP 0 879 774 A1**
(43) Veröffentlichungstag der Anmeldung: **25.11.1998**
(21) Anmeldenummer: 98109341.2
(22) Anmeldetag: 22.05.1998
(51) Int. Cl.: B65G 47/00, B65G 47/71, B65G 47/64

(54) **Übergabevorrichtung für auf einem umlaufenden endlosen Zuführband in Querreihen ankommende Gegenstände**

(30) Priorität: 22.05.1997 DE 19721397
(71) Anmelder: Wilhelm Hogenkamp Verpackungstechnik, 30161 Hannover (DE)
(72) Erfinder: Wilhelm Hogenkamp Verpackungstechnik, 30161 Hannover (DE)
(74) Vertreter: Patentanwälte Rehberg + Hüppe

(57) **Zusammenfassung**

Bei einer Übergabevorrichtung für auf einem umlaufenden endlosen Zuführband (1) in Querreihen ankommende Gegenstände (5), insbesondere Süßwarenteile, wie Schokoladetafeln, Riegel, Pralinen od. dgl., an mindestens zwei Verarbeitungsstellen, ist dem Zuführband (1) ein in gleicher Förderrichtung (6) arbeitendes Weitergabeband (8) einerseits und ein außerhalb der Ebene des Zuführbandes (1) angeordnetes rechtwinklig zur Förderrichtung förderndes Abführband (24) andererseits nachgeschaltet. Zwischen Zuführband (1) und Abführband (24) ist eine Übertragungseinrichtung (9) vorgesehen, die über einen Schwenkantrieb (16, 25) zwischen einem Anschluß an das Zuführband (1) und einem Anschluß an das Abführband (24) hin- und herbeweglich angetrieben ist. Die Übertragungseinrichtung (9) ist um eine sich quer zur Förderrichtung (6) erstreckende Achse (11) schwenkbar. Die Übertragungseinrichtung (9) ist als ein ebenes plattenförmiges Element (10) ausgebildet, dessen sich quer zur Förderrichtung (6) erstreckende Achse (11) vor dem Ende des Zuführbandes (1) und oberhalb der Förderebene des Zuführbandes (1) derart angeordnet ist, daß das plattenförmige Element (10) der Übertragungseinrichtung (9) unter Ausbildung eines Kippwinkels (17) oder einer Fallhöhe zwischen Zuführband (1) und plattenförmigem Element (10) relativ an das Ende des Zuführbandes (1) heranschwenkbar ist. Die Übertragungseinrichtung (9) weist einen hin- und hergehend betätigbaren Schieber (19) mit ortsfester Lagerung zum Überschieben jeweils einer Reihe der Gegenstände (5) von dem plattenförmigen Element (10) auf das Abführband (24) auf.

## Beschreibung

Die Erfindung betrifft eine Übergabevorrichtung für auf einem umlaufenden endlosen Zuführband in Querreihen ankommende Gegenstände, insbesondere Süßwarenteile, wie Schokoladetafeln, Riegel, Pralinen od. dgl., an mindestens zwei Verarbeitungsstellen, wobei dem Zuführband ein in gleicher Förderrichtung arbeitendes Weitergabeband einerseits und ein außerhalb der Ebene des Zuführbandes angeordnetes rechtwinklig zur Förderrichtung förderndes Abführband andererseits nachgeschaltet sind und zwischen Zuführband und Abführband eine Übertragungseinrichtung vorgesehen ist, die über einen Schwenkantrieb zwischen einem Anschluß an das Zuführband und einem Anschluß an das Abführband hin- und herbeweglich angetrieben ist, wobei die Übertragungseinrichtung um eine sich quer zur Förderrichtung erstreckende Achse schwenkbar ist. Eine solche Übergabevorrichtung wird insbesondere vor einer Reihe von Packmaschinen eingesetzt, auf die ein Strom von in Querreihen auf einem Zuführband ankommenden Gegenständen aufgeteilt werden muß. In der Draufsicht nimmt das Abführband relativ zu dem Zuführband einen Winkel von 90° ein. Es kommt darauf an, auf dem Abführband eine ununterbrochene Reihe von Gegenständen für einen kontinuierlichen Betrieb der Packmaschine bzw. einer anderen Verarbeitungsstelle zu ermöglichen.

Eine Übergabevorrichtung der eingangs beschriebenen Art ist aus der US 3,605,982 bekannt. Dem Zuführband ist ein in gleicher Höhe und gleicher Förderrichtung arbeitendes Weitergabeband zugeordnet. Unterhalb der Ebene des Zuführbandes ist ein Abführband nachgeschaltet, welches die auf dem Zuführband ankommenden Gegenstände seitlich quer zur Förderrichtung des Zuführbandes abführt. Zwischen Zuführband und Abführband ist ein Übertragungsband vorgesehen, dessen Förderrichtung mit der des Abführbandes übereinstimmt. Das Übertragungsband ist um eine sich quer zur Förderrichtung des Zuführbandes erstreckende Achse schwenkbar, wobei diese Achse in der Längsmitte des Übertragungsbandes angeordnet ist. Das Weitergabeband ist ebenfalls um eine sich quer zur Förderrichtung erstreckende Achse schwenkbar, wobei diese Achse am Ende des Weitergabebandes vorgesehen ist. Es ist ein gemeinsamer Schwenkantrieb für die Verschwenkbewegungen des Übertragungsbandes und des Weitergabebandes vorgesehen, der an dem Weitergabeband angreift. Um auch das Übertragungsband zu verschwenken, ist dieses mit dem Anfang des Weitergabebandes mechanisch beweglich gekoppelt, also durch eine gelenkig angeordnete Stange o. dgl. verbunden. Die Anordnung nur eines Schwenkantriebes für die beiden Schwenkbewegungen des Weitergabebandes einerseits und des Übertragungsbandes andererseits vereinfacht vorteilhaft den baulichen Aufwand der Übergabevorrichtung. In nachteiliger Weise gerät jedoch das Übertragungsband bei der Abnahme der Gegenstände von dem Zuführband in eine erhebliche Schräglage, so daß die Gefahr besteht, daß die in Querreihen ankommenden Gegenstände auf dem Übertragungsband verrutschen können. Über eine Anschlagleiste wird das Herabfallen der Gegenstände von dem Übertragungsband verhindert. Die erhebliche Schräglage des Übertragungsbandes zum Aufnahmezeitpunkt für Gegenstände, die auf dem Zuführband herangeführt werden, ist andererseits aber erforderlich, damit die Gegenstände durch einen Rutschvorgang überhaupt auf das Übertragungsband gelangen, weil für das Rutschen insoweit nur die Schwerkrafteinwirkung auf die Gegenstände genutzt wird. Das Abführband kann von der nachgeordneten Packmaschine gesteuert angetrieben werden, d.h. das Abführband kann im Anschluß an die Übernahme einer Reihe von Gegenständen weiterlaufen. Dabei entsteht auf dem Abführband notwendigerweise eine Lücke, weil das Übertragungsband zu diesem Zeitpunkt gerade eine weitere Reihe von Gegenständen von dem Zuführband aufnimmt. Durch die Nutzung des Rutschvorgangs beim Übertritt der Gegenstände von dem Zuführband auf das Übertragungsband muß das Abführband unterhalb der Förderebene aus Zuführband und Weitergabeband angeordnet werden.

Die DE 44 38 207 A1 zeigt eine Übergabevorrichtung für auf einem umlaufenden endlosen Zuführband in Querreihen ankommende Gegenstände, insbesondere Süßwarenteile, wie Schokoladetafeln, Riegel, Pralinen od. dgl., an mindestens zwei Verarbeitungsstellen. Dem Zuführband ist ein insbesondere in gleicher Höhe und gleicher Förderrichtung arbeitendes Weitergabeband einerseits und ein außerhalb der Ebene des Zuführbandes angeordnetes Abführband andererseits nachgeschaltet. Zwischen Zuführband und Abführband ist ein Übertragungsband vorgesehen, das zusammen mit dem Weitergabeband über einen gemeinsamen Schwenkantrieb für die Bewegungen des Übertragungsbandes und des Weitergabebandes zwischen einem Anschluß des Weitergabebandes an das Zuführband und einem Anschluß des Übertragungsbandes an das Zuführband hin- und herbeweglich angetrieben ist. Das dem Weitergabeband bzw. dem Übertragungsband zugekehrte Ende des Zuführbandes ist ortsfest angeordnet, zumindest ist der dem Ende des Zuführbandes zugekehrte Anfang des Weitergabebandes um eine sich quer zur Förderrichtung erstreckende Achse schwenkbar. Das Übertragungsband ist um eine sich quer zur Förderrichtung erstreckende Achse schwenkbar. Das Übertragungsband und zumindest der schwenkbare Teil des Weitergabebandes sind mechanisch fest gekoppelt, insbesondere auf einem gemeinsamen Rahmen angeordnet. Somit sind das Weitergabeband und auch das Übertragungsband um die sich quer zur Förderrichtung erstreckende Achse gemeinsam schwenkbar. Es ist aber auch möglich, daß die sich quer zur Förderrichtung erstreckende Achse für die Verschwenkung des Übertragungsbandes im Unendlichen angeordnet ist, und daß für die Bewegung des Übertragungsbandes in etwa vertikaler Richtung translatorische, insbesondere vertikal wirkende, Führungselemente vorgesehen sind. Bei dieser Übergabevorrichtung wird der Rutschvorgang vorteilhaft durch einen Fördervorgang ersetzt, da das Übertragungsband ein über einen Schieber angetriebenes Band aufweist, welches in Hauptförderrichtung entsprechend der Förderrichtung des Zuführbandes angetrieben wird. Allerdings muß der Antrieb des Bandes des Übertragungsbandes in seiner Richtung umkehrbar ausgebildet sein. Lücken auf dem Abführband werden vorteilhaft vermieden, weil das Abführband parallel zu dem Übertragungsband angeordnet ist und so die Übergabe der Reihe von Gegenständen auf einmal erfolgt.

Eine weitere Übergabevorrichtung ist aus der DE 28 31 323 C2 bekannt. Das Zuführband weist an seinem der Förderrichtung zugekehrten Ende eine nach unten verschwenkbare Nase auf. Es ist ein längenveränderliches Übertragungsband vorgesehen, welches um eine quer zur Förderrichtung schwenkbare Achse in zwei Stellungen verschwenkbar ist, wobei es in der einen Stellung an die abgesenkte Nase des Zuführbandes Anschluß hat und so Gegenstände aufnehmen kann, während es in der anderen Stellung Anschluß an das Abführband besitzt und so Gegenstände an das Abführband abgegeben werden können. Wenn die Nase des Zuführbandes nicht abgesenkt ist, hat sie Anschluß an ein Weitergabeband, welches sich in horizontaler Förderebene an das Zuführband anschließt. Vorteilhaft gelangen damit die Gegenstände ohne Rutschen von dem Zuführband auf das Übertragungsband und ohne Schräglage auf das Weitergabeband. Vor der Verarbeitungsstelle jedoch müssen die Gegenstände in dem nach unten abgesenkten Teil des Zuführbandes sowie auf dem Übertragungsband in Schräglage gefördert werden. Dieser Schrägwinkel kann je nach der Ausbildung der Gegenstände nicht beliebig groß gewählt werden, weil es erforderlich ist, die Querreihenausrichtung der Gegenstände auch während der Übergabe beizubehalten. Durch die Anordnung des Übertragungsbandes und des Abführbandes unterhalb der Förderebene des Zuführbandes und des Weitergabebandes besteht nur eine eingeschränkte Sicht, die für die Behebung von Betriebsstörungen oder die Durchführung von Reinigungsarbeiten hinderlich ist. Durch die Anordnung des Übertragungsbandes, seines erforderlichen Schwenkantriebes und seiner längenveränderlichen Aufhängung bekommt das Weitergabeband in Förderrichtung notwendigerweise eine relativ große Länge, so daß diese Einheit der Übertragungsvorrichtung relativ lang baut. Die bekannte Übertragungsvorrichtung verfolgt jedoch folgerichtig den Gedanken, einen Strom von Gegenständen durch eine weichenartige Bewegung des Endes des Zuführbandes selbst aufzuteilen. Für die aufeinander abgestimmten Bewegungen der Antriebe der Bänder sind entsprechende Fühl- und Steuermittel vorgesehen.

Aus der EP 0 558 123 A1 ist eine Übergabevorrichtung bekannt, die auf derjenigen der DE 28 31 323 C2 aufbaut. Das längenveränderliche Übertragungsband ist durch ein kurzes umkehrbar gesteuertes und mit einem Schieber versehenes Förderband ersetzt. Aber auch der Anfang des Weitergabebandes ist absenkbar gestaltet, wobei dem Weitergabeband ein zweites mit einem Schieber versehenes Förderband zugeordnet ist. Die Anordnung ist symmetrisch zu der Vertikalebene der Übergabestelle zwischen Zuführband und Weitergabeband ausgebildet. Die beiden Förderbänder der Übertragungseinrichtung sind nicht nur jeweils schwenkbar, sondern zusätzlich noch translatorisch in zwei Richtungen bewegbar, wodurch sich der Steuerungsaufwand der Übergabevorrichtung beträchtlich erhöht. Die Gegenstände haben vorteilhaft keine Möglichkeit zu verrutschen, weil sie entweder gefördert oder geschoben werden.

Der Erfindung liegt die Aufgabe zugrunde, eine Übergabevorrichtung der eingangs beschriebenen Art bereitzustellen, die einen verringerten Bauaufwand erfordert und somit preiswert herstellbar ist. Das unkontrollierte Rutschen der Gegenstände soll ebenso vermieden werden wie ein steuerungsaufweniges Fördern im Bereich des Übertragungsbandes.

Erfindungsgemäß wird dies bei der Übergabevorrichtung der eingangs beschriebenen Art dadurch erreicht, daß die Übertragungseinrichtung als ein ebenes plattenförmiges Element ausgebildet ist, dessen sich quer zur Förderrichtung erstreckende Achse vor dem Ende des Zuführbandes und oberhalb der Förderebene des Zuführbandes derart angeordnet ist, daß das plattenförmige Element der Übertragungseinrichtung unter Ausbildung eines Kippwinkels oder einer Fallhöhe zwischen Zuführband und plattenförmigem Element relativ an das Ende des Zuführbandes heranschwenkbar ist, und daß die Übertragungseinrichtung einen hin- und hergehend betätigbaren Schieber mit ortsfester Lagerung zum Überschieben jeweils einer Reihe der Gegenstände von dem plattenförmigen Element auf das Abführband aufweist.

Die Erfindung geht von dem Gedanken aus, den Rutschvorgang oder den Fördervorgang beim Übergang der Gegenstände von dem Ende des Zuführbandes auf die Übertragungseinrichtung durch einen Kipp- oder Fallvorgang in begrenztem Umfang zu ersetzen und die Bewegungsenergie der Förderung der Gegenstände auf dem Zuführband für diesen Übertritt zu nutzen. Hierzu wird ganz bewußt eine gemeinsame Förderebene zwischen der Oberfläche des Zuführbandes und der Oberfläche der Übertragungseinrichtung vermieden und stattdessen eine winkelförmige oder versetzte Konfiguration geschaffen, die das Abkippen und/oder begrenzte Fallen der Gegenstände am Übergang zwischen dem Ende des Zuführbandes und der Übertragungseinrichtung gestattet bzw. nutzt. Ein über das Ende des Zuführbandes hinausgeförderter Gegenstand kann nur dann abkippen oder begrenzt fallen, wenn sein Schwerpunkt am Ende des Übergabebandes freigekommen ist. Dabei wird in geschickter Weise die Bewegungsenergie der Förderung des Gegenstandes auf dem Zuführband genutzt, um letztendlich den Spalt zwischen dem Ende des Zuführbandes und der Übergabevorrichtung zu überwinden. Es genügt für die Zwecke der vorliegenden Erfindung völlig, wenn jedenfalls der größere Teil des Gegenstandes einschließlich des Schwerpunktes des Gegenstandes auf die Übergabevorrichtung gelangt. Es ist nicht schädlich, wenn die Gegenstände noch teilweise im Bereich des Endes des Zuführbandes sind. Die Ausnutzung dieses begrenzten Kipp- und/oder Fallvorganges erbringt eine wesentliche konstruktive Vereinfachung für die Übergabevorrichtung. Die Übergabevorrichtung muß weder ein längenveränderliches Band, noch ein Förderband sein, sondern es genügt ein einfaches, ebenes, plattenförmiges Element, also beispielsweise in Form eines Bleches oder eines Bodens. Dieses plattenförmige Element wird in der Übergabestellung der Gegenstände von dem Zuführband in einer nur mäßigen Schräglage angeordnet, und zwar derart, daß die Gegenstände auf der Übergabevorrichtung nicht rutschen können. Demzufolge kann sich auch vorteilhaft ihre Längsausrichtung auf der Übergabevorrichtung nicht ändern. Ihre Ausrichtung in Querreihen wird automatisch korrigiert, falls dies erforderlich ist, weil jeder Kipp- bzw. Fallvorgang den Gegenstand ausgerichtet in der Querreihe auf der Übertragungseinrichtung an gleicher Stelle endet. Damit können die Gegenstände in der Querreihe auf dem Zuführband durchaus einen gewissen Versatz in Förderrichtung aufweisen, der automatisch korrigiert wird, ohne daß ein Anschlag o. dgl. Verwendung findet. Bei dieser Art der Nutzung eines begrenzten Kipp- oder Fallvorganges ist es erforderlich, die Übertragungseinrichtung so unterhalb der Förderebene des Zuführbandes anzuordnen, daß sich dieser Vorgang abspielen kann. Andererseits ist es erforderlich, die Übertragungseinrichtung nach Aufnahme einer Querreihe von Gegenständen nach aufwärts zu verschwenken, ggf. damit die hinteren Enden der Gegenstände der Querreihe von dem Ende des Zuführbandes freikommen. Wichtig ist in diesem Zusammenhang, daß die Achse für die Verschwenkung der Übertragungseinrichtung sowohl vor dem Ende des Zuführbandes als auch oberhalb der Förderebene des Zuführbandes angeordnet ist. Damit wird nicht nur der begrenzte Kipp- und/oder Fallvorgang ermöglicht, sondern beim Aufwärtsschwenken der Übertragungseinrichtung deren geringe Schräglage noch weiter vermindert, so daß jedenfalls die Gefahren eines Eintretens eines Rutschens der Gegenstände vermieden sind. Für das Umsetzen der Gegenstände von dem plattenförmigen Element der Übertragungseinrichtung auf das Abführband genügt ein einfacher Schieber, der hin- und hergehend angetrieben ist. Ein solcher Antrieb kann sehr einfach ausgebildet und gesteuert werden. Eine Synchronisation mit der Geschwindigkeit des Zuführbandes ist nicht erforderlich. Dieser Schieber kann in einer ortsfesten Lagerung geführt und angeordnet sein, so daß sich seine Anordnung auf dem plattenförmigen Element in aller Regel verbietet.

Die neue Übergabevorrichtung weist eine Reihe von Vorteilen auf. Ein Hauptvorteil ist ihre einfache und daher auch preiswerte Herstellbarkeit. Es ist nur ein Antrieb für das Zuführband erforderlich. Von diesem Antrieb kann auch die Schwenkbewegung des plattenförmigen Elementes der Übertragungseinrichtung abgeleitet werden. Der Antrieb des Schiebers kann als einfacher Pneumatikzylinder ausgebildet werden, der keine Synchronisierung mit dem Antrieb des Zuführbandes erfordert. Ein weiterer wesentlicher Vorteil besteht darin, daß das Abführband immer oberhalb der Förderebene des Zuführbandes angeordnet ist, so daß in der Regel die freie Draufsicht auf die Übertragungseinrichtung und das Abführband gegeben ist, so daß Betriebsstörungen schnell erkannt und beseitigt werden können und andererseits eine Reinigung dieser Teile einfach möglich ist. Wesentlich ist auch die Vermeidung von Rutschvorgängen der Gegenstände und die damit vermiedene Möglichkeit der Beeinträchtigung der Ausrichtung der Gegenstände in der Querreihe. Auch einer durch einen Verrutschvorgang bewirkten Verschmutzung der Elemente wird entgegengewirkt. Schließlich ermöglicht die neue Übergabevorrichtung eine sehr einfache Reservesteuerung, d. h. die Rückwärtsförderung von Querreihen und die Abnahme über das Abführband.

Die Übertragungseinrichtung kann mit dem Zuführband oder dem Weitergabeband gelenkig gekuppelt sein. Die Verbindung zwischen der Übertragungseinrichtung und dem jeweiligen Band kann durch einfache gelenkig angelenkte Hebel o. dgl. realisiert werden, so daß die Anordnung eines zusätzlichen Antriebes jeweils entfällt. Durch diese Kupplung wird gleichsam die Zwangsläufigkeit in der Steuerung automatisch erreicht. Es ist auch möglich, sowohl das Zuführband wie auch das Weitergabeband schwenkbar zu gestalten und einen gemeinsamen Antrieb für diese beiden Bänder sowie die Übertragungseinrichtung vorzusehen.

Das Abführband kann parallel zu der Übertragungseinrichtung so angeordnet sein, daß die Gegenstände beim Überschieben von der Übertragungseinrichtung auf das Abführband die Förderrichtung beibehalten. Dies bedeutet, daß das Abführband immer auf der Seite des plattenförmigen Elementes der Übertragungseinrichtung angeordnet ist, die sich in Förderrichtung anschließt. Hierdurch werden Lücken auf dem Abführband vermieden, weil selbst bei kontinuierlichem Antrieb des Abführbandes ein Anschluß der einzelnen Querreihen aneinander möglich wird. Das Abführband kann also auf der durch die Förderrichtung bestimmten Seite neben dem plattenförmigen Element der Übertragungseinrichtung angeordnet sein.

Als gemeinsamer Antrieb für die Bewegungen des plattenförmigen Elementes der Übertragungseinrichtung einerseits und des Zuführbandes oder des Weitergabebandes andererseits kann ein Kurbeltrieb vorgesehen sein. Ein solcher Kurbeltrieb stellt ein einfaches und preiswertes Antriebselement dar. Mit einem Kurbeltrieb wird zugleich sichergestellt, daß die jeweiligen Anschlußstellungen sicher und genau und mit geringer Endgeschwindigkeit erreicht werden.

Zumindest das Ende des Zuführbandes in seiner Anschlußstellung zu dem plattenförmigen Element der Übertragungseinrichtung und zumindest der Beginn des Weitergabebandes, insbesondere entsprechend dem halben Kippwinkel, kann leicht ansteigend angeordnet sein. Übermäßige Schräglagen, die Veranlassung zu einem Rutschvorgang sein könnten, werden damit mit Sicherheit ausgeschlossen. Die Schräglage kann sogar auf zwei Elemente verteilt werden.

Der hin- und hergehend betätigbare Schieber kann auf einer Führungsstange in Förderrichtung translatorisch verschieblich geführt sein. Für seinen Antrieb kann ein Pneumatikzylinder vorgesehen sein. Es versteht sich, daß die Führungsstange und der Pneumatikzylinder ortsfest angeordnet sind und die Bewegung über die Kolbenstange auf den Schieber übertragen wird. Die Steuerung des Pneumatikzylinders läßt sich in Abhängigkeit von dem Erreichen der verschwenkten Stellung des plattenförmigen Elementes der Übertragungseinrichtung oder in Abhängigkeit von der Freimeldung des Abführbandes steuern.

Zwischen dem Ende des Zuführbandes und dem Beginn des Weitergabebandes kann ein Zwischenband vorgesehen sein, dessen Länge in Förderrichtung der Erstreckung des plattenförmigen Elementes und der Breite des Abführbandes entspricht, wobei das Weitergabeband auch in eine Anschlußstellung zu dem Abführband verschwenkbar ist. Bei diesem Zwischenband handelt es sich um ein relativ kleines Band, welches in Förderrichtung angetrieben ist und es ermöglicht, daß der Beginn des Weitergabebandes von dem Ende des Zuführbandes entfernt angeordnet werden kann, und zwar so, daß in einer anderen Stellung der Beginn des Weitergabebandes Anschluß an das Abführband, nunmehr aber von der anderen Seite der Übertragungseinrichtung her, hat. Damit ist eine Reservesteuerung möglich, d. h. vorher nicht abgenommene Reihen von Gegenständen können rückwärts durch die Übergabevorrichtung geführt und einer Weiterverarbeitung zugeleitet werden.

Dem Weitergabeband kann ein Rückschieber zum Aufschieben jeweils einer Reihe von Gegenständen von dem Weitergabeband auf das Abführband zugeordnet sein. Dieser Rückschieber tritt in Funktion, wenn die Reservesteuerung durchgeführt wird. Der Rückschieber kann antriebsmäßig mit dem Schieber gekoppelt sein. Zumindest ist es möglich, daß der Schieber und der Rückschieber gemeinsam auf der Führungsstange gelagert sind.

Die Erfindung wird anhand bevorzugter Ausführungsbeispiele weiter erläutert und beschrieben. Es zeigen:
- Figur 1: eine schematisierte Seitenansicht einer ersten Ausführungsform der Übergabevorrichtung, nach der Übernahme einer Querreihe von Gegenständen auf die Übertragungseinrichtung,
- Figur 2: die Relativlage der Teile vor dem Überschieben einer Querreihe von der Übertragungseinrichtung auf das Abführband,
- Figur 3: eine schematisierte Seitenansicht einer zweiten Ausführungsform der Übergabevorrichtung, nach der Übernahme einer Querreihe von Gegenständen auf die Übertragungseinrichtung,
- Figur 4: die Relativlage der Teile der Übergabevorrichtung nach Fig. 3 vor dem Überschieben einer Querreihe von Gegenständen von der Übertragungseinrichtung auf das Abführband,
- Figur 5: eine schematisierte Seitenansicht einer weiteren Ausführungsform der Übergabevorrichtung, vor dem Überschieben einer Querreihe von Gegenständen von der Übertragungseinrichtung auf das Abführband, und
- Figur 6: die Übergabevorrichtung gemäß Fig. 5 vor dem Rückschieben einer Querreihe von Gegenständen von dem Weitergabeband auf das Abführband.

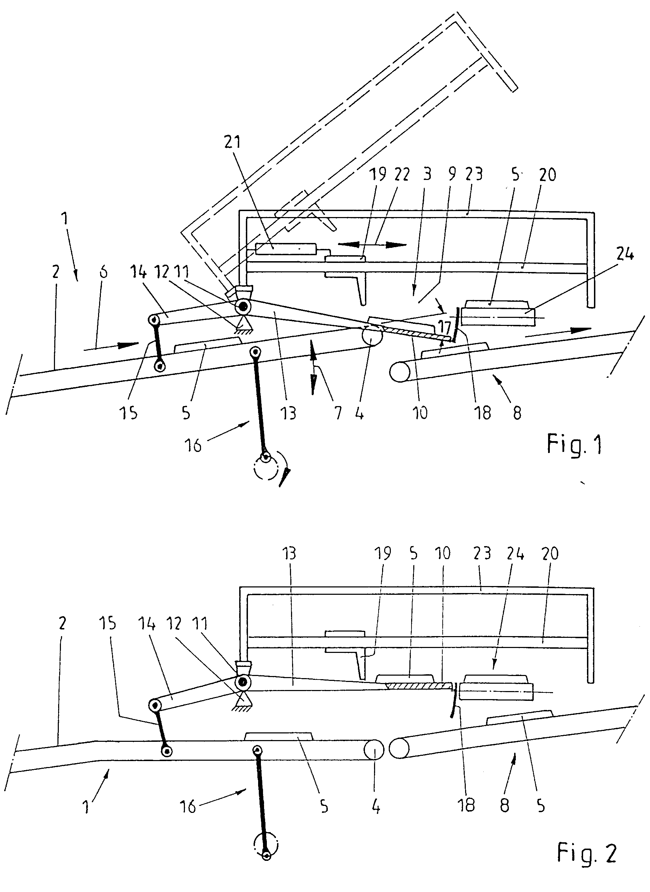

In Fig. 1 ist schematisch das Ende eines Zuführbandes 1 dargestellt, dessen endlos umlaufendes Band 2 im Bereich einer Übergabestelle 3 um eine Umlenkwalze 4 geschlungen ist. Statt der Umlenkwalze 4 kann auch eine messerartige Bandkante vorgesehen sein.

Auf dem Zuführband 1 werden Gegenstände 5, in Querreihen nebeneinanderliegend, in Förderrichtung 6 gefördert. Das Zuführband 1 besitzt einen kontinuierlich einwirkenden Antrieb, der hier nicht näher dargestellt ist. Die Umlenkwalze 4 und damit das Ende des Zuführbandes 1 kann schwenkbar um eine horizontal angeordnete Achse angeordnet sein, so daß Bewegungen entsprechend dem Doppelpfeil 7 möglich sind. Fig. 1 zeigt die eine Endstellung des Endes des Zuführbandes 1, während Fig. 2 die andere Endlage wiedergibt, in der das Zuführband 1 Anschluß an ein Weitergabeband 8 hat. Das Weitergabeband 8 kann zugleich das Zuführband 1 einer weiteren Übergabevorrichtung sein. In der Regel sind innerhalb einer Straße mehrere solcher Übergabevorrichtungen hintereinander in Förderrichtung 6 angeordnet.

Im Bereich des Endes des Zuführbandes 1, nämlich der Übergabestelle 3, ist eine Übertragungseinrichtung 9 vorgesehen, deren wesentliches Teil, nämlich ein plattenförmiges Element 10, also beispielsweise ein Blech o. dgl., um die Achse 11 eines ortsfesten Lagers 12 begrenzt schwenkbar ist, wobei auch hier die Endstellungen aus dem Vergleich der Fig. 1 und 2 hervorgehen.

Das Element 10 ist mit Hilfe von seitlich angeordneten Armen 13 an der Achse 11 schwenkbar aufgehängt. Die Arme 13 können sich in Hebelarmen 14 fortsetzen. Über je eine Lenkstange 15 sind die Hebelarme 14 mit dem nicht dargestellten Rahmen des Zuführbandes 1 gelenkig verbunden. Andererseits greift ein als Kurbelantrieb ausgebildeter Schwenkantrieb 16 ebenfalls gelenkig an dem Rahmen des Zuführbandes an, so daß sowohl das Zuführband 1 wie auch die Übertragungseinrichtung 9 über diesen einen Schwenkantrieb 16 gegenläufig betätigt werden, wie dies aus dem Vergleich der Fig. 1 und 2 erkennbar ist.

In der Position der Teile gemäß Fig. 1 schließt das plattenförmige Element 10 an das Ende des Zuführbandes 1 in der dargestellten Stellung an, d. h. das plattenförmige Element 10 ist unter Ausbildung eines Kippwinkels 17 zu der Förderebene des Zuführbandes 1 positioniert, und zwar so, daß sowohl auf dem Zuführband 1 wie auch auf dem plattenförmigen Element 10 nur geringe Schräglagen gegenüber der Horizontalebene erreicht werden, so daß mit Sicherheit ein Rutschvorgang der Gegenstände 5 infolge Schwerkrafteinwirkung vermieden wird. Sinn der neuen Übergabevorrichtung ist es, einen Rutsch- und/oder Fördervorgang durch einen begrenzten Kipp- oder Fallvorgang zu ersetzen. So kann der Kippwinkel 17 auch durch einen geringfügigen Versatz der Oberfläche des plattenförmigen Elementes 10, also durch eine Fallhöhe, ersetzt sein. Dies bedeutet, daß die Oberflächen des Zuführbandes 1 und des plattenförmigen Elementes 10 nicht unbedingt tangential an den Außenumfang der Umlenkwalze 4 anschließen müssen. Sinn des Kippwinkels 17 und/oder der Fallhöhe ist es, das Abkippen von Gegenständen 5 am Ende des Zuführbandes 1 bewußt für den Fördervorgang der Gegenstände von dem Zuführband 1 auf das plattenförmige Element 10 auszunutzen. Dabei wird auch die Bewegungsenergie der Gegenstände 5 auf dem Zuführband 1 genutzt. Ein Kipp- oder Fallvorgang kann immer nur dann stattfinden, wenn der Schwerpunkt der Gegenstände 5 bereits das Ende des Zuführbandes 1 verlassen hat, sich also über den Einwirkbereich im Umfeld der Umlenkwalze 4 hinausbewegt hat. Hat sich aber der Schwerpunkt hinausbewegt, dann ist damit zu rechnen, daß dieser auch oberhalb des plattenförmigen Elementes 10 liegt, mitunter jedoch nicht weit von dessen anschließender Randkante entfernt. Immerhin wird aber damit der einzelne Gegenstand 5 verläßlich auf dem plattenförmigen Element 10 abgesetzt oder abgelegt, ohne daß dieser verrutschen kann. Das Kippen bzw. Absetzen einer Querreihe von Gegenständen 5 geschieht gleichzeitig oder nahezu gleichzeitig, da die Gegenstände 5 ohnehin in Querreihen bereits mehr oder weniger ausgerichtet auf dem Zuführband 1 herangeführt werden. Die Anordnung eines Schutzbleches 18 gegen Herabfallen der Gegenstände 5 von dem plattenförmigen Element ist in aller Regel nicht erforderlich.

Zu der Übertragungseinrichtung 9 gehört noch ein Schieber 19, der auf einer Führungsstange 20 translatorisch gleitend geführt ist und von einem Pneumatikzylinder 21 hin- und hergehend gemäß Doppelpfeil 22 angetrieben wird. Diese Elemente sind im Bereich eines Deckels 23 vorgesehen bzw. gelagert, der ebenfalls an dem ortsfesten Lager 12 schwenkbar aufgehängt ist, wie seine gestrichelt dargestellte hochgeschwenkte Stellung aufzeigt, die der Deckel zu Reinigungszwecken und zur Behebung von Betriebsstörungen einnimmt. Man erkennt zugleich, daß die Übertragungseinrichtung 9 dann frei zugänglich ist.

Oberhalb des Zuführbandes 1 und des Weitergabebandes 8 ist ein Abführband 24 vorgesehen, welches in Relation zu dem plattenförmigen Element 10 der Übertragungseinrichtung 9 vorgesehen ist und sich in Förderrichtung 6 an das plattenförmige Element 10 anschließt (Fig. 2). Das Abführband 24 reicht also über die Arbeitsbreite des Zuführbandes 1 bzw. des Weitergabebandes 8. Bei dem Abführband 24 handelt es sich um ein z. B. kontinuierlich angetriebenes Förderband, welches quer zur Förderrichtung 6, also senkrecht zur Zeichenebene, fördert und damit die Gegenstände 5 hintereinander in einer Reihe kontinuierlich rechtwinklig zu der Haupterstreckungsrichtung der Übergabevorrichtung austrägt. Das Abführband 24 wird daher auch oft als Austrageband bezeichnet. Es fördert die Gegenstände 5 zu einer Weiterver

arbeitungsstation, insbesondere einer Packmaschine. Sobald eine Querreihe von Gegenständen 5 durch den begrenzten Kipp- oder Fallvorgang entsprechend dem Kippwinkel 17 sich auf den plattenförmigen Element 10 der Übertragungseinrichtung 9 abgelagert hat, wird der Schwenkantrieb 16 um eine halbe Umdrehung in Tätigkeit gesetzt, so daß die Elemente von der Position der Fig. 1 in die Fig. 2 übergehen. Damit bekommt einerseits das Ende des Zuführbandes 1 direkt Anschluß an das Weitergabeband 8, und die nächste ankommende Querreihe von Gegenständen 5 kann auf das Weitergabeband 8 abgegeben werden. Gleichzeitig bekommt aber das plattenförmige Element 10 Anschluß an die Oberfläche des Abführbandes 24. Sobald der letzte Gegenstand 5 der Querreihe, die zuvor von dem Abführband 24 übernommen worden ist, die Arbeitsbreite des Zuführbandes 1 verlassen ist und somit das Abführband 24 für die Übernahme einer weiteren Querreihe von Gegenständen 5 bereit ist, wird über den Pneumatikzylinder 21 der Schieber 19 in Tätigkeit gesetzt, so daß die Querreihe der Gegenstände gemeinsam von dem plattenförmigen Element 10 auf die Oberfläche des Abführbandes 24 geschoben werden. Sobald das plattenförmige Element 10 von Gegenständen 5 frei ist, ist es bereit, in der Übergabestelle 3 wiederum an das Ende des Zuführbandes 1 herangeschwenkt zu werden, so daß die Relativlage der Teile gemäß Fig. 1 erneut entsteht und eine weitere Querreihe von Gegenständen 5 durch den Kipp- und/oder Fallvorgang von dem plattenförmigen Element 10 übernommen werden kann.

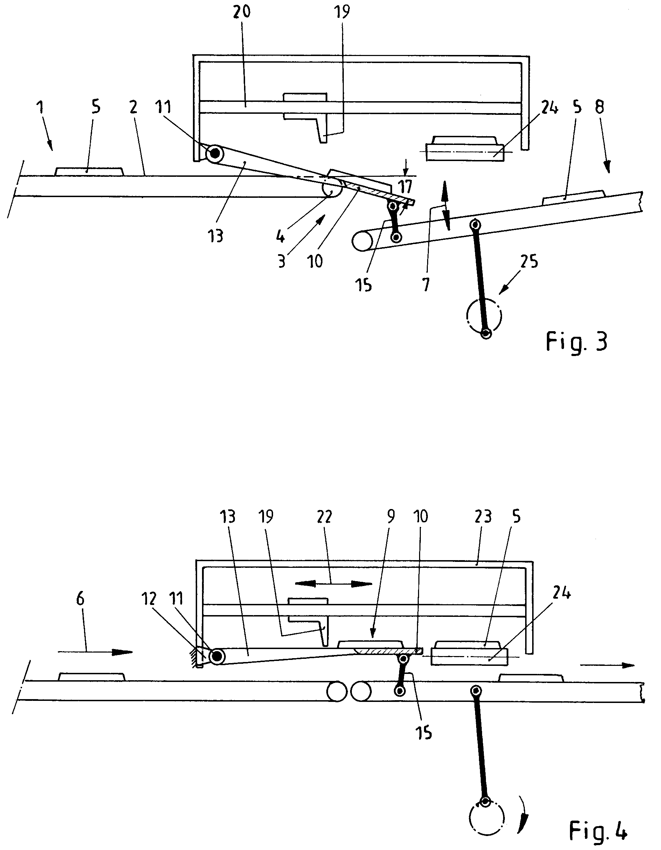

In den Fig. 3 und 4 ist eine weitere Ausführungsform der Übergabevorrichtung dargestellt, die in weiten Bereichen mit derjenigen gemäß Fig. 1 übereinstimmt. In Abweichung hierzu ist jedoch das Ende des Zuführbandes 1 ortsfest angeordnet, während zumindest der Beginn des Weitergabebandes 8 um eine horizontale Achse schwenkbar gemäß Doppelpfeil 7 ist. Auch hier ist das plattenförmige Element 10 der Übertragungseinrichtung 9 an der Achse 11 schwenkbar aufgehängt. Die Lenkstange 15 befindet sich hier jedoch zwischen dem Rahmen des Weitergabebandes 8 und dem plattenförmigen Element 10. Auch ein Schwenkantrieb 25, der als Kurbelantrieb ausgebildet sein kann, greift am Rahmen des Weitergabebandes 8 an und erbringt das gleichzeitige Verschwenken des Weitergabebandes 8 und der Übertragungseinrichtung 9. Hier erfolgt das Verschwenken zwar nicht gegenläufig, sondern sinnfällig, wie aus einem Vergleich der Fig. 3 und 4 hervorgeht. Auch hier bildet sich wiederum der Kippwinkel 17 aus. Infolge der Horizontalanordnung des Zuführbandes 1 besitzt das plattenförmige Element 10 hier eine etwas vergleichsweise größere Schräglage, die jedoch immer noch eine solche Schräglage vermeidet, in der eine Rutschgefahr der Gegenstände auf dem Element 10 entsteht.

Fig. 3 zeigt die Relativlage der Teile während bzw. nach einem Kipp- oder Fallvorgang im Bereich der Übergabestelle 3. Fig. 4 zeigt die Relativlage der Teile vor dem Überschieben der Reihe der Gegenstände 5 auf das Abführband 24, wobei gleichzeitig das Weitergabeband 8 Anschluß an das Zuführband 1 hat. Auch hierbei ist erkennbar, daß sich die Schwenkachse 11 vor der Übergabestelle 3 und oberhalb der durch das Zuführband 1 aufgespannten Förderebene befindet. Das Abführband 24 befindet sich parallel und rechts von dem plattenförmigen Element 10, also in Förderrichtung 6 anschließend. Es reicht ebenfalls über die Arbeitsbreite des Zuführbandes 1 bzw. des Weitergabebandes 8, so daß beim Überschieben je einer Reihe von Gegenständen 5 auf das Abführband 24 Lücken in der dann aus Gegenständen 5 auf dem Abführband 24 gebildeten Endlosreihe vermieden werden.

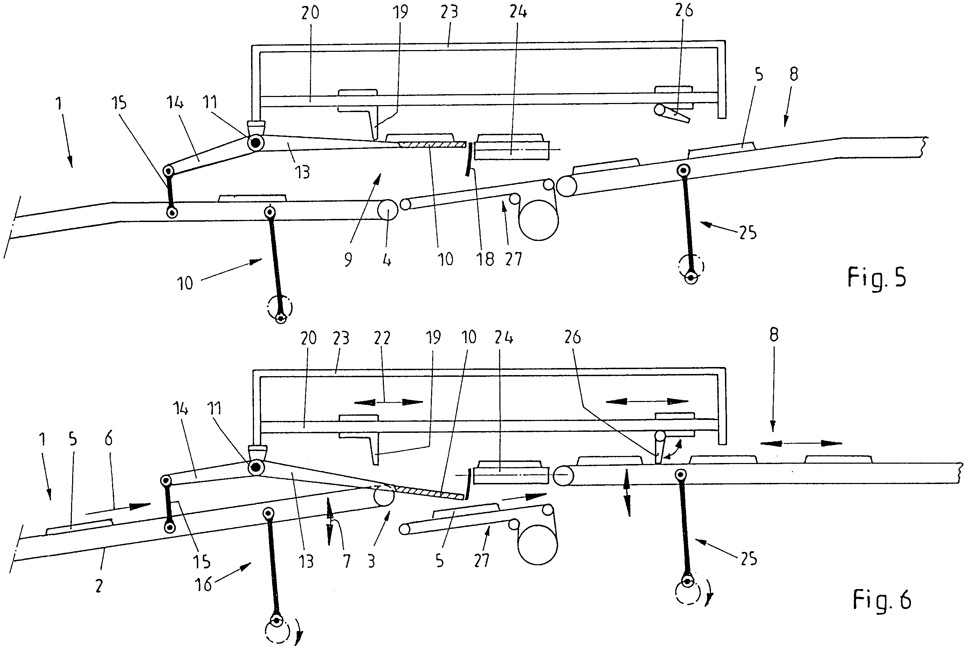

Die Ausführungsform gemäß den Fig. 5 und 6 zeigt eine Weiterbildung der Ausführungsform gemäß Fig. 1 und 2, jedoch mit dem Unterschied, daß das Weitergabeband 8 nicht direkt an das Ende des Zuführbandes 1 anschließt. Es ist vielmehr ein Abstand vorgesehen, der von einem Zwischenband 27 überbrückt wird. Dabei ist die Länge des Zwischenbandes 27 so gewählt, daß sie die Erstreckung des plattenförmigen Elementes 10 und die Breite des Abführbandes 24 in Förderrichtung 6 überbrückt, so daß es möglich wird, gemäß Fig. 6 den Beginn des Weitergabebandes 8 nach rückwärts in Anschluß an das Abführband 24 zu bringen.

Die Funktion dieser Ausführungsform ist zunächst analog der Funktion, wie es bei dem Ausführungsbeispiel der Fig. 1 und 2 beschrieben worden ist. In der Überschiebestellung gemäß Fig. 5 der Gegenstände von dem plattenförmigen Element 10 auf das Abführband 24 kann die nachfolgende Querreihe von Gegenständen 5 auf das Zwischenband 27 gelangen und von diesem an den Beginn des Weitergabebandes 8 weitergefördert werden. Das Weitergabeband 8 ist hier mit einem Schwenkantrieb 25 versehen, der entsprechend gesteuert wird.

Fig. 6 zeigt die sogenannte Reservesteuerung, also das Rückführen von Querreihen von Gegenständen, wenn beispielsweise die Zufuhr weiterer Gegenstände auf dem Zuführband 1 unterbrochen wird oder der Überschuß an Gegenständen, die vorher nicht abgenommen werden konnten, durch die Anlage durchgelaufen ist und nunmehr nach rückwärts abgearbeitet werden soll. Der Schwenkantrieb 25 wird in eine Stellung gebracht, so daß das Weitergabeband 8 Anschluß an das Abführband 24 hat. Ein Rückschieber 26 kann synchron mit dem Rückwärtsantrieb des Weitergabebandes 8 geschaltet werden und den Überschiebevorgang unterstützen bzw. vervollkommnen. Dabei wird jeweils eine Querreihe nach der anderen auf das Abführband 24 geschoben, während das Zwischenband 27 und das Zuführband 1 stillgesetzt sind.

### BEZUGSZEICHENLISTE

- 1: - Zuführband
- 2: - Band
- 3: - Übergabestelle
- 4: - Umlenkwalze
- 5: - Gegenstand
- 6: - Förderrichtung
- 7: - Doppelpfeil
- 8: - Weitergabeband
- 9: - Übertragungseinrichtung
- 10: - plattenförmiges Element
- 11: - Achse
- 12: - Lager
- 13: - Arm
- 14: - Hebelarm
- 15: - Lenkstange
- 16: - Schwenkantrieb
- 17: - Kippwinkel
- 18: - Schutzblech
- 19: - Schieber
- 20: - Führungsstange
- 21: - Pneumatikzylinder
- 22: - Doppelpfeil
- 23: - Deckel
- 24: - Abführband
- 25: - Schwenkantrieb
- 26: - Rückschieber
- 27: - Zwischenband

## Patentansprüche

1. Übergabevorrichtung für auf einem umlaufenden endlosen Zuführband (1) in Querreihen ankommende Gegenstände (5), insbesondere Süßwarenteile, wie Schokoladetafeln, Riegel, Pralinen o. dgl., an mindestens zwei Verarbeitungsstellen, wobei dem Zuführband (1) ein in gleicher Förderrichtung (6) arbeitendes Weitergabeband (8) einerseits und ein außerhalb der Ebene des Zuführbandes (1) angeordnetes rechtwinklig zur Förderrichtung förderndes Abführband (24) andererseits nachgeschaltet sind und zwischen Zuführband (1) und Abführband (24) eine Übertragungseinrichtung (9) vorgesehen ist, die über einen Schwenkantrieb (16, 25) zwischen einem Anschluß an das Zuführband (1) und einem Anschluß an das Abführband (24) hin- und herbeweglich angetrieben ist, wobei die Übertragungseinrichtung (9) um eine sich quer zur Förderrichtung (6) erstreckende Achse (11) schwenkbar ist, **dadurch gekennzeichnet**, daß die Übertragungseinrichtung (9) als ein ebenes plattenförmiges Element (10) ausgebildet ist, dessen sich quer zur Förderrichtung (6) erstreckende Achse (11) vor dem Ende des Zuführbandes (1) und oberhalb der Förderebene des Zuführbandes (1) derart angeordnet ist, daß das plattenförmige Element (10) der Übertragungseinrichtung (9) unter Ausbildung eines Kippwinkels (17) oder einer Fallhöhe zwischen Zuführband (1) und plattenförmigem Element (10) relativ an das Ende des Zuführbandes (1) heranschwenkbar ist, und daß die Übertragungseinrichtung (9) einen hin- und hergehend betätigbaren Schieber (19) mit ortsfester Lagerung zum Überschieben jeweils einer Reihe der Gegenstände (5) von dem plattenförmigen Element (10) auf das Abführband (24) aufweist.

2. Übergabevorrichtung nach Anspruch 1, **dadurch gekennzeichnet**, daß die Übertragungseinrichtung (9) mit dem Zuführband (1) oder dem Weitergabeband (8) gelenkig gekuppelt ist.

3. Übergabevorrichtung nach Anspruch 1 oder 2**, dadurch gekennzeichnet**, daß das Abführband (24) parallel zu der Übertragungseinrichtung (9) so angeordnet ist, daß die Gegenstände (5) beim Überschieben von der Übertragungseinrichtung (9) auf das Abführband (24) die Förderrichtung (6) beibehalten.

4. Übergabevorrichtung nach einem der Ansprüche 1 bis 3, **dadurch gekennzeichnet**, daß das Abführband (24) auf der durch die Förderrichtung (6) bestimmten Seite neben dem plattenförmigen Element (10) der Übertragungseinrichtung (9) angeordnet ist.

5. Übergabevorrichtung nach einem der Ansprüch 1 bis 4, **dadurch gekennzeichnet**, daß als gemeinsamer Antrieb (16, 25) für die Bewegungen des plattenförmigen Elementes (10) der Übertragungseinrichtung (9) einerseits und des Zuführbandes (1) oder des Weitergabebandes (8) andererseits ein Kurbeltrieb vorgesehen ist.

6. Übergabevorrichtung nach einem der Ansprüche 1 bis 5, **dadurch gekennzeichnet**, daß zumindest das Ende des Zuführbandes (1) in seiner Anschlußstellung zu dem plattenförmigen Element (10) der Übertragungseinrichtung (9) und zumindest der Beginn des Weitergabebandes (8), insbesondere entsprechend dem halben Kippwinkel (17), leicht ansteigend angeordnet sind.

7. Übergabevorrichtung nach Anspruch 1, **dadurch gekennzeichnet**, daß der hin- und hergehend betätigbare Schieber (19) auf einer Führungsstange (20) in Förderrichtung (6) translatorisch verschieblich geführt ist und daß für seinen Antrieb ein Pneumatikzylinder (21) vorgesehen ist.

8. Übergabevorrichtung nach einem der Ansprüche 1 bis 7, **dadurch gekennzeichnet**, daß zwischen dem Ende des Zuführbandes (1) und dem Beginn des Weitergabebandes (8) ein Zwischenband (27) vorgesehen ist, dessen Länge in Förderrichtung (6) der Erstreckung des plattenförmigen Elementes (10) und der Breite des Abführbandes (24) entspricht, und daß das Weitergabeband (8) auch in eine Anschlußstellung zu dem Abführband (24) verschwenkbar ist.

9. Übergabevorrichtung nach Anspruch 8, **dadurch gekennzeichnet**, daß dem Weitergabeband (8) ein Rückschieber (26) zum Aufschieben jeweils einer Reihe von Gegenständen von dem Weitergabeband (8) auf das Abführband (24) zugeordnet ist.

10. Übergabevorrichtung nach Anspruch 1, 7 und 9, **dadurch gekennzeichnet**, daß der Schieber (19) und der Rückschieber (26) gemeinsam auf der Führungsstange (20) gelagert sind.
